Europäisches Patentamt

European Patent Office

Office européen des brevets

(11) Veröffentlichungsnummer: **0 196 472**

**A1**

## (12) EUROPÄISCHE PATENTANMELDUNG

(21) Anmeldenummer: **86102709.2**

(22) Anmeldetag: **01.03.86**

(51) Int. Cl.⁴: **F 04 D 29/62**
F 04 D 13/02, H 02 K 7/11

(30) Priorität: **13.03.85 DE 3508872**

(43) Veröffentlichungstag der Anmeldung:
**08.10.86 Patentblatt 86/41**

(84) Benannte Vertragsstaaten:
**BE CH DE FR GB IT LI NL SE**

(71) Anmelder: **Deutsche Vortex GmbH**
**Erkelenzer Strasse 34**
**D-4050 Mönchengladbach 5(DE)**

(72) Erfinder: **Schmidt, Hans-Dieter**
**Wunnensteinstrasse 16/3**
**D-7148 Remseck 3(DE)**

(74) Vertreter: **Möhrke, Dieter, Dipl.-Ing.**
**Blumenberger Strasse 143/145**
**D-4050 Mönchengladbach 1(DE)**

(54) fluidpumpe.

(57) Zum Zweck des raschen Auswechselns der Kraftmaschine (4), ohne daß das Fluidsystem geöffnet werden muß, ist das Pumpenlaufrad durch eine Magnetkupplung mit der elektrischen Kraftmaschine (4) verbunden. Der mit dem Pumpenlaufrad verbundene Teil der Magnetkupplung weist einen mit dem Fluid gefüllten Luftspalt auf, der durch eine Abdeckung hermetisch gegen die Außenluft abgeschlossen ist. Die Kraftmaschine (4) und der kraftmaschinenseitige Teil der Magnetkupplung ist durch einen ohne Werkzeug handbetätigbaren Schnellverschluß 39, bestehend aus mindestens einer Kombination von Rast (33) und Klinke (34), auswechselbar mit dem Pumpengehäuse (2) verbunden.

FIG. 1

EP 0 196 472 A1

Croydon Printing Company Ltd.

## Fluidpumpe

Die Erfindung betrifft eine Fluidpumpe, bestehend aus Pumpengehäuse, Pumpenlaufrad und elektrischer Kraftmaschine.

Im Kreislauf eines Wärmeträgermediums befindliche Pumpen, wie sie beispielsweise für solarautarke Energiesysteme verwendet werden, besitzen üblicherweise elektrische Kraftmaschinen, die als Gleichstrom-Kollektormotoren ausgebildet sind.

Derartige Kraftmaschinen haben eine begrenzte Lebensdauer, sind als Massenartikel aber preiswert und durchaus wirtschaftlich.

Um die Betriebssicherheit zu gewährleisten, muß die Fluidpumpe nach einer vorgegebenen Laufzeit gegen eine neue Pumpe ausgetauscht werden. Hierzu ist es in der Regel erforderlich, das geschlossene Wärmeträgersystem zu öffnen. Nach dem Einbau der neuen Fluidpumpen ist verlorengegangenes Fluid zu ersetzen und anschließend muß das Wärmeträgersystem entlüftet werden.

Der Erfindung liegt die Aufgabe zugrunde, die Voraussetzungen dafür zu schaffen, daß einem raschen Verschleiß unterliegende Teile der Fluidpumpe ohne Zuhilfenahme von Werkzeug und ohne daß das Fluidsystem geöffnet werden muß, rasch und sicher gegen neue Teile ausgewechselt werden können.

Diese Aufgabe wird gemäß der Erfindung dadurch gelöst, daß das Pumpenlaufrad durch eine Magnetkupplung mit der elektrischen Kraftmaschine verbunden ist, daß der mit dem Pumpenlaufrad verbundene Teil der Magnetkupplung einen mit Fluid gefüllten Luftspalt aufweist, der durch eine Abdeckung hermetisch gegen die Außenluft abgeschlossen ist, und daß die Kraftmaschine und der kraftmaschinenseitige Teil der Magnetkupplung durch einen

- . -

ohne Werkzeug handbetätigbaren Schnellverschluß auswechselbar
mit dem Pumpengehäuse verbunden ist.

Da die eigentliche Pumpe, bestehend aus Pumpengehäuse und Pumpenlaufrad, erheblich weniger verschleißt als die Kraftmaschine, und weil die Magnetkupplung keinem nennenswerten Verschleiß unterliegt, kann die Kraftmaschine und der kraftmaschinenseitige Teil der Magnetkupplung mehrmals ausgewechselt
werden, bevor die übrigen Teile der Fluidpumpe wegen Verschleißes eusgewechselt werden müssen. Das Auswechseln der
Kraftmaschine ist problemlos und geht so rasch, daß der Kreislauf eines Fluids oder eines Wärmeträgers entweder gar nicht,
oder nur ganz kurzzeitig zum Stillstand kommt, was in den
meisten Fällen keinen Einfluß auf die Wirksamkeit des Fluidsystems hat.

Nach einer weiteren Ausbildung der Erfindung besitzt das Pumpengehäuse ein Führungselement für die Kraftmaschine. Dabei
besteht der Schnellverschluß aus mindestens einer Kombination
von Rast und Klinke, wobei je ein Teil der Kombination an dem
Führungselement und an der Kraftmaschine angeordnet ist und
die Kombination einen Schnappverschluß bildet.

Nach dem Einschnappen des Schnappverschlusses ist die Kraftmaschine am Pumpengehäuse bereits lagerichtig und dauerhaft befestigt. Das Führungselement gibt der Kraftmaschine einen
festen Halt.

Vorteilhaft ist das Führungselement als eine zum Gehäuse der
Kraftmaschine passende Hülse ausgebildet, die über den Umfang
verteilte Rasten aufweist, wobei zugleich das Gehäuse der
Kraftmaschine über den Umfang verteilt angeordnete, in die
Rasten der Hülsen passende federnde Klinken besitzt. Sind beispielsweise drei Kombinationen aus Rast und Klinke über den

- . -

VO 3
0196472
12.3.1985

Umfang verteilt angeordnet, so ist bereits ein sicherer, fester Halt gewährleistet.

Nach einer weiteren Ausbildung der Erfindung besitzen die Klinken das Einstecken des Gehäuses der Kraftmaschine in die Hülse erleichternde, gegen die Längsachse der Kraftmaschine geneigte Abschrägungen. Infolge der Abschrägungen können die Klinken leichter in das Gehäuse hineingleiten und anschließend einrasten.

Nach einer weiteren Ausbildung der Erfindung ist vorgesehen, daß die Klinken gegen die Umfangsrichtung geneigte, das Entriegeln des Gehäuses der Kraftmaschine durch Drehen des Gehäuses in Umfangsrichtung ermöglichende Abschrägungen aufweisen.

Während das Einrasten der Kraftmaschine in das Führungselement durch Vorschieben in Längsrichtung bewirkt wird, geschieht das Entriegeln durch Drehen der Kraftmaschine um ihre Längsachse. Die Klinken gleiten dabei aus den Rasten und anschließend kann dann die Kraftmaschine zusammen mit dem kraftmaschinenseitigen Teil der Magnetkupplung axial aus dem Führungselement beziehungsweise dem das Führungselement bildenden Gehäuse herausgezogen werden.

Die Zeichnungen zeigen ein Ausführungsbeispiel der Erfindung. Anhand dieses Ausführungsbeispiels wird die Erfindung näher beschrieben und erläutert.

Fig. 1 zeigt eine Teilansicht der Fluidpumpe.

Fig. 2 zeigt einen Schnitt durch die Fluidpumpe längs der in Fig. 1 gezeichneten Linie II-II.

Die Fig. 3 und 4 zeigen die Fluidpumpe in der gleichen Schnittdarstellung wie Fig. 2, jedoch in ausgeklinktem Zustand.

Fig. 5 zeigt einen Schnitt längs der in Fig. 3 gezeichneten Linie V-V.

Die insgesamt mit 1 bezeichnete Fluidpumpe besteht aus einem Pumpengehäuse 2, einem Pumpenlaufrad 3 und einer elektrischen Kraftmaschine 4. Die Kraftmaschine ist als Gleichstrom-Kollektormotor für Niederspannung ausgebildet. Ein Kabel 6 dient der Stromzufuhr.

Der Eingangskanal 5 des Pumpengehäuses 2 ist mit einer Rohrleitung 7, der Ausgangskanal 9 mit einer Rohrleitung 8 verschraubt. Das Fluid strömt in Richtung des Pfeils 10 aus der Rohrleitung 7 in den Eingangskanal 5, von dort zentral in das Pumpenlaufrad 3, tritt radial aus dem Pumpenlaufrad 3 in eine Kammer 11 und gelangt von dort über den Ausgangskanal 9 in die Rohrleitung 8.

Die Rohrleitungen 7 und 8 gehören beispielsweise zu einem geschlossenen Wärmeträgersystem.

Eine die Kammer 11 umgebende ringförmige Wand 12 des Pumpengehäuses 2 trägt eine konzentrisch zum Pumpenlaufrad 3 angeordnete Dichtrille, in die ein Dichtring 13 eingelegt ist. Auf den Dichtring 13 ist der Außenrand einer sich nach außen vorwölbenden Kalotte 14 aufgelegt. Auf dem Außenrand der Kalotte 14 liegt wiederum der ringförmige Rand 15 einer Hülse 16 auf. Die Hülse 16 ist konzentrisch zur Rotationsachse 17 des Pumpenlaufrades 3 und der Kraftmaschine 4 angeordnet.

Die ringförmige Wand 12 ist mit einem Außengewinde 18, der
Rand 15 mit einem nach außen vorspringenden ringförmigen Ansatz 19 versehen. Eine mit Innengewinde versehene Verschraubung 20 übergreift den Ansatz 19 und greift in das Außengewinde 18 ein, so daß die Hülse 16 fest gegen den Außenrand der
Kalotte 14 und damit gegen den Dichtring 13 gepreßt werden
kann, bis der Rand 15 gegebenenfalls metallischen Kontakt mit
der Wand 12 aufnimmt. Dadurch ist eine feste Verbindung der
Hülse 16 mit dem Pumpengehäuse 2 gegeben.

Die Welle 21 der elektrischen Kraftmaschine 4 ist mit einer
Scheibe 22 fest verbunden. Die Scheibe 22 trägt ein Flügelrad
23, das der Zwangsbelüftung der elektrischen Kraftmaschine 4
dient. Außerdem trägt die Scheibe 22 einen halbkugelförmig
ausgehöhlten, ringförmigen Magneten 24, der den kraftmaschinenseitigen Teil einer Magnetkupplung bildet. Der laufradseitige Teil der gleichen Magnetkupplung besteht aus einem halbkugelig gestalteten Magneten 25, der fest mit dem Pumpenlaufrad 3 verbunden ist.

Die Kalotte 14 trägt einen zentralen Zapfen 26, auf dem die
Kombination aus Pumpenlaufrad 3 und Magnet 25 gelagert ist.

Die Kalotte 14 bildet die Abdeckung für einen Luftspalt 27,
der mit dem Fluid gefüllt ist. Außerhalb der Kalotte 14 ist
ein weiterer Luftspalt 28 ausgebildet. Der sich zwischen den
beiden Magneten 24 und 25 ausbildende magnetische Fluß geht
durch die beiden Luftspalte 27, 28 und die aus nicht magnetisierbarem Material bestehende Kalotte 14.

Die Kraftmaschine 4 und der kraftmaschinenseitige Teil 24 der
Magnetkupplung 24, 25 ist durch einen ohne Werkzeug handbetätigbaren Schnellverschluß 39 auswechselbar mit dem Pumpenge-

0196472
12.3.1985

häuse 2 verbunden. Hierzu trägt das Gehäuse 30 der Kraftmaschine 4 einen Verstärkungsrand 31, der mit einem nach außen
vorspringendem Kragen 32 versehen ist. Der Kragen 32 liegt auf
dem Rand der Hülse 16 auf. Die Hülse 16 dient als Führungselement für den Verstärkungsrand 31 und damit für die Kraftmaschine 4. An mehreren Stellen, über den Umfang verteilt, liegt
der Verstärkungsrand 31 von innen her gegen die Innenwand der
Hülse 16 an.

Der eigentliche Schnellverschluß 39 besteht aus über den Umfang verteilten drei Kombinationen von Rast 33 und federnder
Klinke 34.

Fig. 5 zeigt die Verteilung der Rasten 33 und Klinken 34 über
den Umfang. Dabei ist zu berücksichtigen, daß Fig. 5 die Teile
im ausgerasteten und nicht im eingerasteten Zustand zeigt. Jede der Kombinationen 33, 34 bildet einen Schnappverschluß.

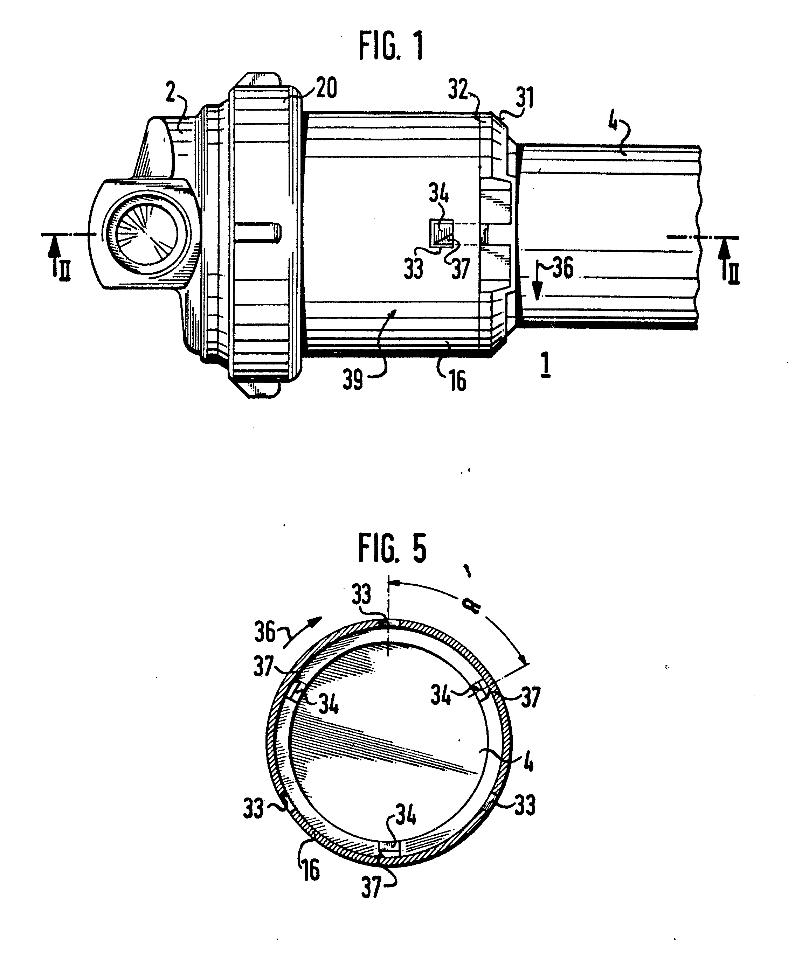

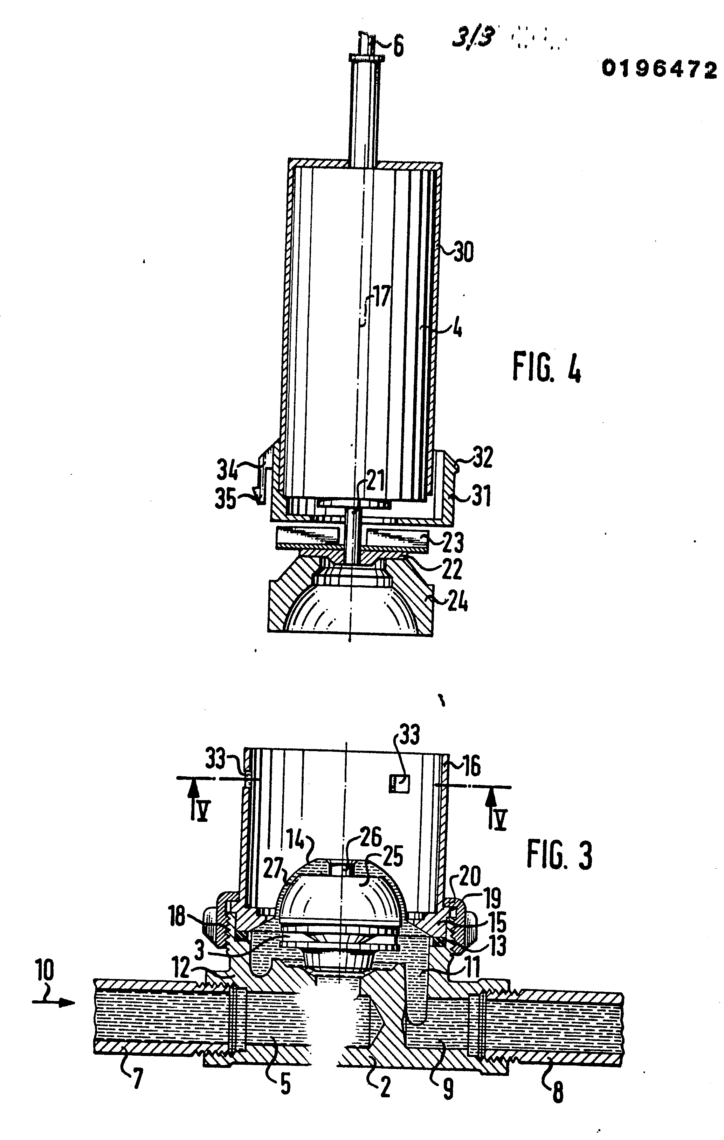

Besonders die Fig. 4 und 5 lassen erkennen, daß die Klinken
34 das Einstecken des Gehäuses 30, 31 der Kraftmaschine 4 in
die Hülse 16 erleichternde, gegen die Längsachse 17 der Kraftmaschine 4 geneigte Abschrägungen 35 aufweisen. Die Fig. 1 und
5 lassen darüberhinaus erkennen, daß die Klinken 34 gegen die
Umfangsrichtung geneigte, das Entriegeln des Gehäuses 30, 31
der Kraftmaschine 4 durch Drehen des Gehäuses in Umfangsrichtung 36 ermöglichende Abschrägungen 37 aufweisen.

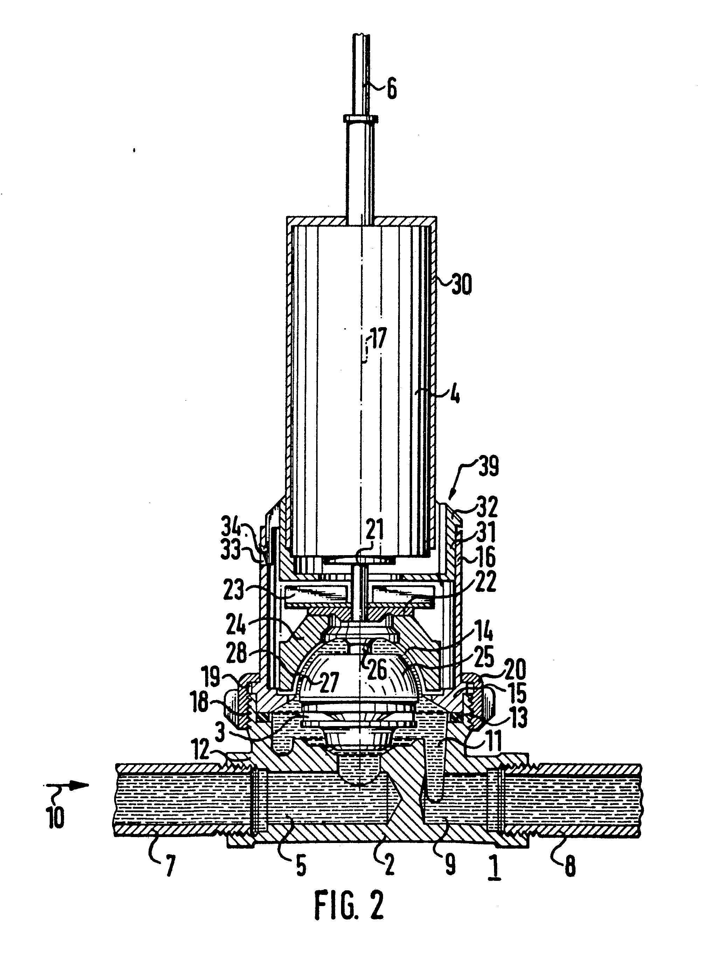

Im zusammengebauten Zustand gemäß Fig. 2 rotieren die beiden
Magnete 24 und 25, ohne die Kalotte 28 zu berühren. Zum Auswechseln der Kraftmaschine 4 wird der hier nicht dargestellte
Stecker des Kabels 6 gezogen, das Gehäuse 30 mit der Hand erfaßt und in Umfangsrichtung 36, das heißt gegen den Uhrzeigersinn, um einen Winkel $\alpha$ bis etwa 90 Grad gedreht. Danach

0196472
12.3.1985

kann die Baueinheit von Kraftmaschine 4, Flügelrad 23 und Magnet 24 mühelos in Richtung der Rotationsachse 17 entfernt werden. Das Aufstecken der neuen Kraftmaschine 4 geschieht genauso einfach. Zunächst wird der Gehäuseteil beziehungsweise Verstärkungsrand 31 in die Hülse 16 bis zum Anschlag eingesteckt, danach erfolgt eine Drehung in oder gegen den Uhrzeigersinn, vorzugsweise aber gegen den Uhrzeigersinn, bis die Klinken 34 einrasten. Dann wird der Stecker des Kabels 6 eingesteckt und die neue Kraftmaschine 4 beginnt zu arbeiten.

Die Kraftmaschine kann so rasch ausgewechselt werden, daß das Pumpenlaufrad 3 infolge seiner kinetischen Energie gar nicht erst zum Stillstand kommt.

Patentansprüche:

1. Fluidpumpe, bestehend aus Pumpengehäuse, Pumpenlaufrad und elektrischer Kraftmaschine, dadurch g e k e n n z e i c h - n e t, daß das Pumpenlaufrad (3) durch eine Magnetkupplung (24, 25) mit der elektrischen Kraftmaschine (4) verbunden ist, daß der mit dem Pumpenlaufrad (3) verbundene Teil (25) der Magnetkupplung (24, 25) einen mit dem Fluid gefüllten Luftspalt (27) aufweist, der durch eine Abdeckung (14) hermetisch gegen die Außenluft abgeschlossen ist, und daß die Kraftmaschine (4) und der kraftmaschinenseitige Teil (24) der Magnetkupplung (24, 25) durch einen ohne Werkzeug hand-betätigbaren Schnellverschluß (39) auswechselbar mit dem Pumpengehäuse (2) verbunden ist.

2. Fluidpumpe nach Anspruch 1, dadurch gekennzeichnet, daß das Pumpengehäuse (2) ein Führungselement (16) für die Kraftmaschine (4) besitzt und daß der Schnellverschluß (39) aus mindestens einer Kombination von Rast (33) und Klinke (34) besteht, wobei je ein Teil der Kombination (33, 34) an dem Führungselement (16) und an der Kraftmaschine (4) angeordnet ist und die Kombination (33, 34) einen Schnappverschluß bildet.

- . -

0196472
SPT W10/L
12.3.1985

3. Fluidpumpe nach Anspruch 2, dadurch gekennzeichnet, daß das Führungselement als eine zum Gehäuse (30, 31) der Kraftmaschine (4) passende Hülse (16) ausgebildet ist, die über den Umfang verteilte Rasten (33) aufweist, und daß das Gehäuse (30, 31) der Kraftmaschine (4) über den Umfang verteilt angeordnete, in die Rasten (33) der Hülse (16) passende federnde Klinken (34) besitzt.

4. Fluidpumpe nach Anspruch 3, dadurch gekennzeichnet, daß die Klinken (34) das Einstecken des Gehäuses (30, 31) der Kraftmaschine (4) in die Hülse (16) erleichternde, gegen die Längsachse (17) der Kraftmaschine (4) geneigte Abschrägungen (35) aufweisen.

5. Fluidpumpe nach Anspruch 3 oder 4, dadurch gekennzeichnet, daß die Klinken (34) gegen die Umfangsrichtung (36) geneigte, das Entriegeln des Gehäuses (30, 31) der Kraftmaschine (4) durch Drehen des Gehäuses (30, 31) in Umfangsrichtung (36) ermöglichende Abschrägungen (37) aufweisen.

- . -

0196472

## FIG. 1

## FIG. 5

FIG. 2

0196472

FIG. 4

FIG. 3

# EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
| X | EP-A-0 009 681  (HOFMANN) <br> * seite 6, Zeile 25 - Seite 7, Zeile 17; Figur 1 * | 1,2 | F 04 D  29/62 <br> F 04 D  13/02 <br> H 02 K   7/11 |
| A | | 3 | |
| Y | DE-B-1 288 918  (KLEIN,SCHANZLIN & BECKER) <br> * Spalte 1, drei letzte Zeilen; Spalte 2, Zeilen 1-4,14-26; Abbildungen 1,5,6 * | 1,2 | |
| A | | 3,4 | |
| Y | FR-A-2 056 783  (TURKOWSKI) <br> * Seite 3, Zeile 19 - Seite 4, Zeile 4; Figuren * | 1,2 | RECHERCHIERTE SACHGEBIETE (Int. Cl. 4) |
| A | | 3 | F 04 D  13/00 <br> F 04 D  29/00 |
| A | US-A-3 481 586  (ROBERTS) <br> * Spalte 2, Zeile 68 - Spalte 3, Zeile 25; Figuren 1,5,6 * | 1,2,3 | H 02 K   7/00 <br> H 02 K  49/00 |
| A | US-A-2 996 994  (WRIGHT) <br> * Spalte 2, Zeilen 46-51; Spalte 3, Zeilen 28-40; figur 1; Spalte 3, Zeile 69 - Spalte 4, Zeile 19; Figuren 2,3,4 * | 1,2 | |

--- -/-

Der vorliegende Recherchenbericht wurde für alle Patentansprüche erstellt

| Recherchenort <br> DEN HAAG | Abschlußdatum der Recherche <br> 26-06-1986 | Prüfer <br> KAPOULAS T. |
|---|---|---|

Europäisches
Patentamt

## EUROPÄISCHER RECHERCHENBERICHT

| | EINSCHLÄGIGE DOKUMENTE | | Seite 2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 227 087 (ALBEE)<br>* Spalte 2, Zeile 48 - Spalte 3, Zeile 52; Figuren * | 3,4 | |
| | ----- | | |

**RECHERCHIERTE SACHGEBIETE (Int Cl.4)**

Der vorliegende Recherchenbericht wurde für alle Patentansprüche erstellt

| Recherchenort<br>DEN HAAG | Abschlußdatum der Recherche<br>26-06-1986 | Prüfer<br>KAPOULAS T. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82